# EUROPÄISCHE PATENTSCHRIFT

(11) **EP 3 052 881 B1**
(45) Veröffentlichungstag und Bekanntmachung des Hinweises auf die Patenterteilung: **09.08.2017**
(21) Anmeldenummer: 14761334.3
(22) Anmeldetag: 04.09.2014
(51) Int. Cl.: B22D 41/08, F27B 3/19, B22D 11/10, B22D 11/113, B22D 39/00, B22D 41/14, F27D 3/15, F27D 3/00

(54) **GEFÄSSUNTERTEIL, EIN DAMIT AUSGEBILDETES METALLURGISCHES GEFÄSS SOWIE ELEKTROLICHTBOGENOFEN UND VERFAHREN ZU DESSEN BETRIEB**
VESSEL LOWER PART, A METALLURGICAL VESSEL FORMED THEREWITH AND ALSO AN ELECTRIC ARC FURNACE AND METHOD FOR THE OPERATION THEREOF
PARTIE INFÉRIEURE DE RÉCIPIENT, RÉCIPIENT MÉTALLURGIQUE CONFIGURÉ AVEC UNE TELLE PARTIE INFÉRIEURE AINSI QUE FOUR À ARC ÉLECTRIQUE ET PROCÉDÉ POUR LE FAIRE FONCTIONNER

(30) Priorität: 30.09.2013 DE 102013219682
(43) Veröffentlichungstag der Anmeldung: 10.08.2016
(73) Patentinhaber: Primetals Technologies Austria GmbH, 4031 Linz (AT)
(72) Erfinder: MÜLLER, Alexander, 77652 Offenburg (DE)
(74) Vertreter: Metals@Linz
(86) Internationale Anmeldenummer: PCT/EP2014/068839
(87) Internationale Veröffentlichungsnummer: WO 2015/043910

(56) Entgegenhaltungen:
- EP-A1- 1 850 081
- EP-A2- 1 743 948
- DE-A1-102009 013 869

## Beschreibung

Die Erfindung betrifft ein Gefäßunterteil für ein metallurgisches Gefäß, mit einer Gefäßwand, einem Gefäßboden, einem Schmelzraum und mindestens einer Abstichvorrichtung zum Abziehen von flüssigem Metall aus dem Schmelzraum. Die Erfindung betrifft weiterhin ein metallurgisches Gefäß mit einem solchen Gefäßunterteil sowie einen damit ausgestatteten Elektrolichtbogenofen und ein Verfahren zu dessen Betrieb.

Gefäßunterteile und metallurgische Gefäße der eingangs genannten Art sind bereits aus der EP 1181491 B1 bekannt. Das dort offenbarte Gefäßunterteil ist mit einer ersten Abstichvorrichtung ausgestattet, das nach dem Prinzip eines Flüssigkeitshebers arbeitet und eine Art Siphon aufweist. Es ermöglicht einen nahezu schlackefreien Abstich des flüssigen Metalls aus dem Schmelzraum. Weiterhin ist eine zweite Abstichvorrichtung in Form einer Bodenabsticheinrichtung vorhanden, um das Gefäßunterteil im Wartungsfall komplett entleeren zu können. Der Weg des flüssigen Metalls bei einem regulären Abstichvorgang führt durch die erste Abstichvorrichtung, wobei das flüssige Metall durch eine nahe dem Gefäßboden angeordnete Einlassöffnung in der Gefäßwand des Gefäßunterteils in einen aufsteigenden Kanal gelangt, darin bis zu einer Überlaufkante aufsteigt, diese überspült und in einen absteigenden Kanal gelangt. Beim Austritt aus dem absteigenden Kanal wird das flüssige Metall üblicherweise in einer Pfanne aufgefangen. Für weitere Details wird auf den Inhalt der EP 1181491 B1 und EP1850081 A1 verwiesen.

Die in Kontakt zum flüssigen Metall stehenden Teile des Untergefäßes, wie der aufsteigende und absteigende Kanal, die Überlaufkante und die Innenseite des Schmelzraums, sind dabei aus Feuerfestmaterial gebildet und sind bei jedem Abstichvorgang einem Verschleiß, insbesondere durch Abtragung und Auswaschung, unterworfen. Sobald das Feuerfestmaterial so stark abgetragen worden ist, dass eine ordnungsgemäße Funktionsweise der ersten Abstichvorrichtung nicht mehr gewährleistet ist, müssen die betroffenen Teil gewartet, d.h. ausgetauscht oder ausgebessert werden.

Die Forderung nach immer größeren Schmelzaggregaten mit Mengen an flüssigem Metall im Bereich > 100 t pro Abstichvorgang führt zu einem deutlich schnelleren Verbrauch des Feuerfestmaterials im Bereich der ersten Abstichvorrichtung und damit zu einer Verkürzung der Wartungszyklen in einem Maße, dass Schmelzaggregate mit einer solchen ersten Abstichvorrichtung nur noch unwirtschaftlich zu betreiben sind. Sinkt die Standzeit des Feuerfestmaterials eines solchen Schmelzaggregats auf kleiner 6 Tage, ist die Grenze zur Unwirtschaftlichkeit in der Regel erreicht. Die zusätzlich benötigten Zeiten für die Durchführung einer Wartung machen die Produktionskostenvorteile, die durch die größeren Mengen an flüssigem Metall pro Abstichvorgang erhalten werden, wieder zunichte. Zudem ist eine Vergrößerung der Einlassöffnung in die erste Abstichvorrichtung nicht unbegrenzt möglich, da ab einer Breite einer Einlassöffnung von ca. 800 mm das die Einlassöffnung an ihrer Oberkante horizontal begrenzende Feuerfestmaterial den mechanischen Belastungen nicht mehr dauerhaft standhält und bricht.

Es ist daher Aufgabe der Erfindung, ein Gefäßunterteil und ein metallurgisches Gefäß umfassend eine nach dem Prinzip eines Flüssigkeitshebers funktionierende Abstichvorrichtung bereitzustellen, das auch bei Abstichmengen > 100 t an flüssigem Metall wirtschaftlich betreibbar ist.

Die Aufgabe wird gemäss Anspruch 1 für das Gefäßunterteil für ein metallurgisches Gefäß, mit einer Gefäßwand, einem Gefäßboden, einem Schmelzraum und mindestens einer Abstichvorrichtung zum Abziehen von flüssigem Metall aus dem Schmelzraum gelöst, wobei der Schmelzraum zur Aufnahme von > 100 t an flüssigem Metall eingerichtet ist und mindestens eine nach einem Prinzip eines Flüssigkeitshebers ausgebildete erste Abstichvorrichtung vorhanden ist, die mindestens zwei separate Einlassöffnungen in der Gefäßwand zur Überführung des flüssigen Metalls vom Schmelzraum in die erste Abstichvorrichtung aufweist.

Durch die mindestens zwei separaten Einlassöffnungen wird das aus dem Schmelzraum abzulassende flüssige Metall sozusagen in Einzelchargen aufgeteilt. Je nach Tragfähigkeit des eingesetzten Feuerfestmaterials, in dem die Einlassöffnungen gebildet werden, kann die Breite einer Einlassöffnung so groß wie möglich und gleichzeitig so schmal wie nötig ausgebildet werden, um einen Bruch des Feuerfestmaterials zuverlässig zu verhindern. Die mindestens eine erste Abstichvorrichtung weist damit im Vergleich zu der eingangs beschriebenen, bereits bekannten Abstichvorrichtung zumindest in Teilbereichen eine Vervielfachung ihrer Einzelbestandteile und/oder eine Vergrößerung ihrer Abmessungen im Kontaktbereich zum flüssigen Metall auf. Dadurch vergrößert sich die Kontaktfläche zwischen flüssigem Metall und Feuerfestmaterial, wobei an der jeweiligen Kontaktfläche nun weniger flüssiges Metall pro Abstichvorgang entlangströmt. Damit lässt sich der Verschleiß an der mindestens einen ersten Abstichvorrichtung soweit verringern, dass normale Wartungszyklen > 6 Tage erreicht werden können. Die Produktivität des Aggregats, insbesondere eines Elektrolichtbogenofens, in dem das erfindungsgemäße Gefäßunterteil eingesetzt wird, wird demnach durch Verschleiß nicht mehr beeinträchtigt als bei bereits bekannten Aggregaten mit niedrigeren Abstichmengen üblich.

Dabei hat es sich bewährt, dass die Einlassöffnungen in einen einzigen Zuführkanal münden und der Zuführkanal im Bereich mindestens einer Überlaufkante in mindestens einen Abführkanal mündet. Eine jede Einlassöffnung kann mit Vorteil aber auch in einen separaten Zuführkanal münden und die Zuführkanäle im Bereich mindestens einer Überlaufkante in mindestens einen Abführkanal münden.

Besonders bevorzugt ist dabei eine Ausgestaltung, in welcher ein Verhältnis einer Breite der Überlaufkante in Meter zu der Menge an darüber laufendem Metall in Tonnen pro Stunde im Bereich von 0,003 bis 0,005 vorgesehen ist. Dabei ist beispielsweise für einen Abstichvorgang von ca. 150 t ein Verhältnis von 0,005 bevorzugt, während für einen Abstichvorgang von ca. 350 t ein Verhältnis von 0,003 angestrebt ist. Somit wird die Länge der Überlaufkante im Hinblick auf herkömmliche Schmelzaggregate vergrößert und die Menge an während eines Abstichvorgangs darüber laufendem, flüssigen Metall entsprechend reduziert.

Erfindungsgemäß ist demnach der Einsatz von zwei oder mehr parallel und unabhängig voneinander betreibbaren ersten Abstichvorrichtungen am Gefäßunterteil genauso möglich wie der Einsatz einer modifizierten Abstichvorrichtung mit vergrößerter innerer Kontaktfläche zum flüssigen Metall, um die hohen Mengen an flüssigem Metall von > 100 t pro Abstichvorgang wirtschaftlich verarbeiten zu können.

Um Brüche im eingesetzten Feuerfestmaterial zu verhindern, weist eine jede darin gebildete Einlassöffnung insbesondere eine maximale Breite von 800 mm auf.

Als Durchsatzfläche für das flüssige Metall einer jeden Eintrittsöffnung sind maximal 0,5 m² bevorzugt. Das bedeutet also bei einer Breite einer Einlassöffnung von 800 mm eine Höhe der Einlassöffnung von ca. 600 mm.

Der Gefäßboden ist bevorzugt mit mindestens einer zweiten Abstichvorrichtung in Form einer Bodenabsticheinrichtung zur vollständigen Entleerung das Gefäßunterteils im Wartungsfall ausgestattet.

Die der oder die Zuführ- und Abführkanäle sind vorzugsweise mittels mindestens einer Heizvorichtung beheizbar. Insbesondere sind der oder die Zuführkanäle und Abführkanäle jeweils mittels einer Heizvorrichtung beheizbar. Dadurch können unterschiedliche Heizprofile und Heizleistungen eingestellt werden, um erstarrtes Metall im Bereich der Kanäle wieder optimal zu verflüssigen.

Weiterhin ist am Gefäßunterteil vorzugsweise eine Schlackenabführöffnung vorhanden, die der mindestens einen ersten Abstichvorrichtung gegenüberliegend und von diesen durch den Schmelzraum getrennt an der Gefäßwand angeordnet ist. Die Schlackenabführöffnung dient einer Abführung von Schlacke aus dem Schmelzraum, welche auf dem flüssigen Metall beim Einschmelzvorgang aufschwimmt.

Die Aufgabe wird weiterhin für ein metallurgisches Gefäß gelöst, indem dieses ein erfindungsgemäßes Gefäßunterteil und weiterhin ein Gefäßoberteil umfassend mehrere Kühlpaneele aufweist. Mittels eines solchen metallurgischen Gefäßes lassen sich hohe Abstichmengen > 100 t, insbesondere bis zu 350 t, bei üblichen Standzeiten des Feuerfestmaterials der ersten Abstichvorrichtung von > 6 Tagen erzielen.

Ein Elektrolichtbogenofen umfassend ein erfindungsgemäßes metallurgisches Gefäß, dessen Kühlpaneele mit einer Kühlmittelversorgungseinrichtung verbunden sind, hat sich bewährt. Ein derartiger Elektrolichtbogenofen ist bei einer Abstichmenge von ca. 100 t flüssigem Metall pro Abstich zur Erzeugung von ca. 700 t bis 1,3 Mio. t an flüssigem Metall pro Jahr geeignet.

In einer bevorzugten Ausgestaltung des Elektrolichtbogenofens umfasst dieser weiterhin eine Kippeinrichtung zum Kippen des Gefäßunterteils und/oder des metallurgischen Gefäßes in Richtung der mindestens einen Abstichvorrichtung und der Schlackenabführöffnung. Alternativ kann ein Kran zum Kippen des metallurgischen Gefäßes eingesetzt werden.

Ein Verfahren zum Betreiben eines erfindungsgemäßen Elektrolichtbogenofens, wobei bei einem Abstichvorgang mehr als 100 t, insbesondere mehr als 150 t und bis zu 350 t, an flüssigem Metall aus dem Schmelzraum über die mindestens eine erste Abstichvorrichtung aus dem metallurgischen Gefäß fließen, hat sich bewährt. Es sind große Abstichmengen bei üblichem Verschleiß der Abstichvorrichtungen realisierbar.

Die Figuren 1 bis 9 sollen beispielhaft ein erfindungsgemäßes Gefäßunterteil und ein metallurgisches Gefäß sowie einen Elektrolichtbogenofen erläutern. So zeigt
- FIG 1: eine dreidimensionale Ansicht eines Gefäßunterteils,
- FIG 2: eine Draufsicht auf das Gefäßunterteil gemäß FIG 1,
- FIG 3: einen Schnitt durch das Gefäßunterteil gemäß FIG 1, dessen Schmelzraum hier mit flüssigem Metall und darauf schwimmender Schlacke gefüllt ist, in dreidimensionaler Ansicht,
- FIG 4: eine Seitenansicht des Schnitts gemäß FIG 3,
- FIG 5: eine Draufsicht auf das Gefäßunterteil gemäß FIG 1 dessen Schmelzraum hier mit flüssigem Metall und darauf schwimmender Schlacke gefüllt ist,
- FIG 6: ein weiteres erfindungsgemäßes Gefäßunterteil in der Draufsicht mit einem Zuführkanal und zwei Abführkanälen,
- FIG 7: ein weiteres erfindungsgemäßes Gefäßunterteil in der Draufsicht mit zwei Zuführkanälen und einem Abführkanal,
- FIG 8: ein weiteres erfindungsgemäßes Gefäßunterteil in der Draufsicht mit einem Zuführkanal und einem Abführkanal, und
- FIG 9: einen Elektrolichtbogenofen im Schnittbild mit einem metallurgischen Gefäß, das ein Gefäßunterteil gemäß FIG 4 aufweist.

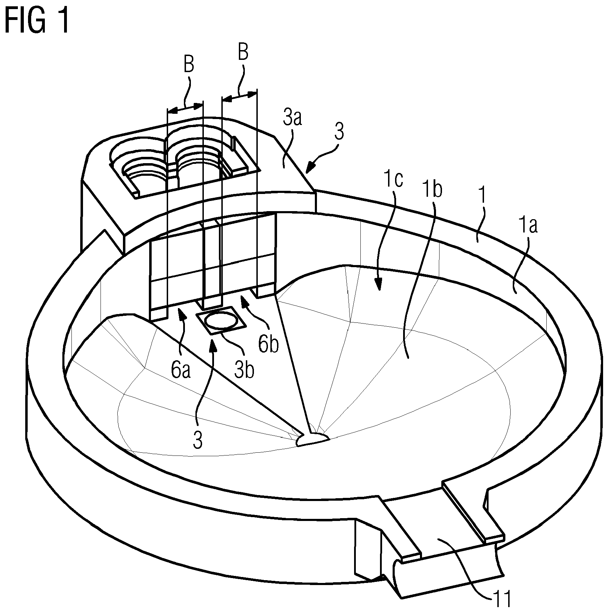

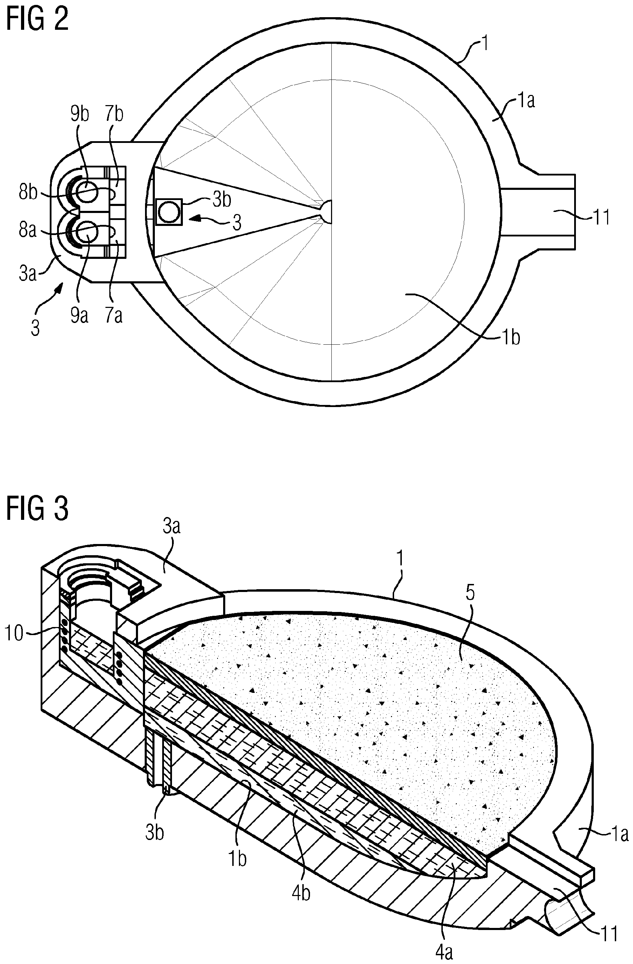

FIG 1 zeigt eine dreidimensionale Ansicht eines Gefäßunterteil 1 für ein metallurgisches Gefäß 2, mit einer Gefäßwand 1a, einem Gefäßboden 1b, einem Schmelzraum 1c und zwei Abstichvorrichtungen 3 zum Abziehen von flüssigem Metall 4a, 4b aus dem Schmelzraum 1c. Vergleiche hierzu FIG 3 hinsichtlich des mit flüssigem Metall 4a, 4b und Schlacke 5 gefüllten Schmelzraums 1c. Der Schmelzraum 1c ist zur Aufnahme von > 150 t an flüssigem Metall 4a, 4b eingerichtet. Es ist weiterhin eine nach einem Prinzip eines Flüssigkeitshebers ausgebildete erste Abstichvorrichtung 3a vorhanden, die zwei separate Einlassöffnungen 6a, 6b in der Gefäßwand 1a zur Überführung des flüssigen Metalls 4a vom Schmelzraum 1c in die erste Abstichvorrichtung 3a aufweist. Die Breite B der Einlassöffnungen 6a, 6b beträgt hier jeweils 800 mm. Weiterhin ist der Gefäßboden 1b mit einer zweiten Abstichvorrichtung 3b in Form einer Bodenabsticheinrichtung zur vollständigen Entleerung das Gefäßunterteils 1, beispielsweise im Wartungsfall, ausgestattet. Durch die zweite Abstichvorrichtung 3b lässt sich auch der sogenannte "Sumpf" an flüssigem Metall 4b, der nach einem Abstichvorgang noch im Gefäßunterteil 1 verbleibt, aus dem Gefäßunterteil 1 ablassen (vergleiche FIG 3).

FIG 2 zeigt eine Draufsicht auf das Gefäßunterteil gemäß FIG 1. Gleiche Bezugszeichen wie in FIG 1 kennzeichnen gleiche Elemente. Hier ist nun die erste Absticheinrichtung 3a im Detail zu erkennen. Eine jede Einlassöffnung 6a, 6b für flüssiges Metall mündet in einen separaten Zuführkanal 7a, 7b, der das flüssige Metall 4a nach oben führt. Die Zuführkanäle 7a, 7b münden im Bereich jeweils einer Überlaufkante 8a, 8b jeweils in einen Abführkanal 9a, 9b, das das flüssige Metall 4a wieder nach unten in Richtung einer Auslassöffnung 16 führt. Die erste Absticheinrichtung 3a funktioniert damit nach dem Prinzip eines Flüssigkeitshebers, wobei das generelle Funktionsprinzip aus der EP 1181491 B1 hervorgeht.

FIG 3 zeigt einen Schnitt durch das Gefäßunterteil 1 gemäß FIG 1, dessen Schmelzraum 1c hier mit flüssigem Metall 4a, 4b und darauf schwimmender Schlacke 5 gefüllt ist, in dreidimensionaler Ansicht. Gleiche Bezugszeichen wie in den Figuren 1 und 2 kennzeichnen gleiche Elemente. Das flüssige Metall 4a, 4b wurde hier in das beim Abstichvorgang aus dem Gefäßunterteil 1 über die erste Absticheinrichtung 3a abfließende flüssige Metall 4a und den zurückbleibenden "Sumpf" aus flüssigem Metall 4b unterteilt, der lediglich über die zweite Absticheinheit 3b im Gefäßboden 1b abgelassen werden kann. In dieser Darstellung ist auch eine Heizvorrichtung 10 erkennbar, mittels der die Zuführkanäle 7a, 7b und die Abführkanäle 9a, 9b beheizbar sind. Hier ist eine Heizvorrichtung in Form einer Heizspule dargestellt. Alternativ ist eine Heizvorrichtung in Form eines Brenners von Vorteil, dessen Flamme von oben auf den Abführkanal gerichtet ist, vergleiche hierzu auch die EP 1181491 B1.

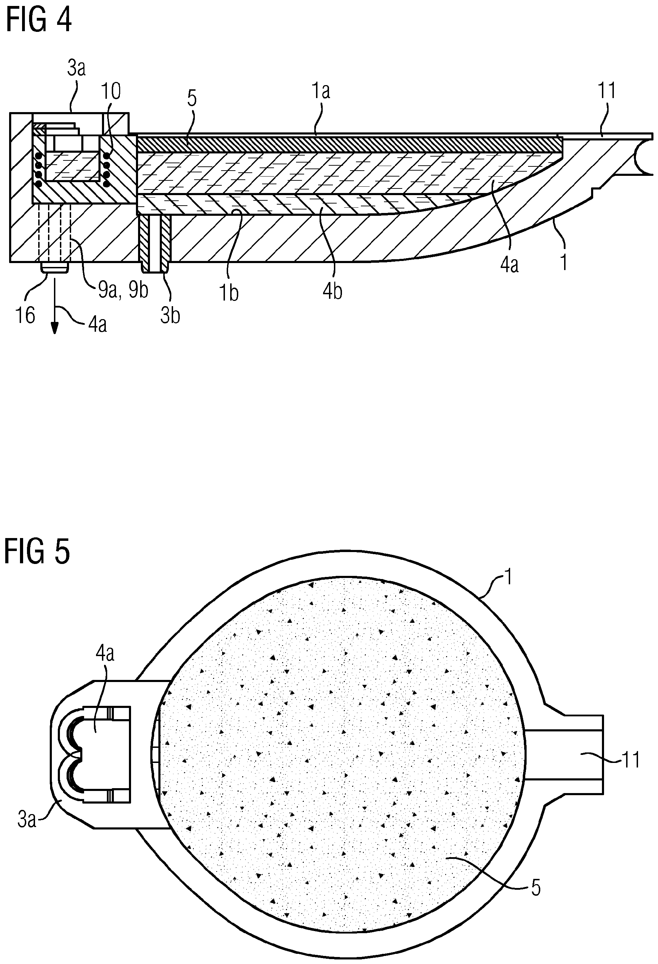

FIG 4 zeigt eine Seitenansicht des Schnitts gemäß FIG 3, wobei gleiche Bezugszeichen gleiche Elemente kennzeichnen. In dieser Ansicht ist die Auslassöffnung 16 erkennbar, in die die Abführkanäle 9a, 9b münden und über welche das flüssige Metall 4a in eine hier nicht dargestellte, temporär darunter angeordnete Pfanne gefüllt wird.

FIG 5 zeigt eine Draufsicht auf das Gefäßunterteil 1 gemäß FIG 1, dessen Schmelzraum 1c hier mit flüssigem Metall 4a, 4b (vergleiche auch FIG 4) und darauf schwimmender Schlacke 5 gefüllt ist. Gleiche Bezugszeichen wie in FIG 1 kennzeichnen gleiche Elemente. In dieser Ansicht sind die Überlaufkanten 8a, 8b von flüssigem Metall 4a überspült, das über die erste Absticheinheit 3a abgestochen wird.

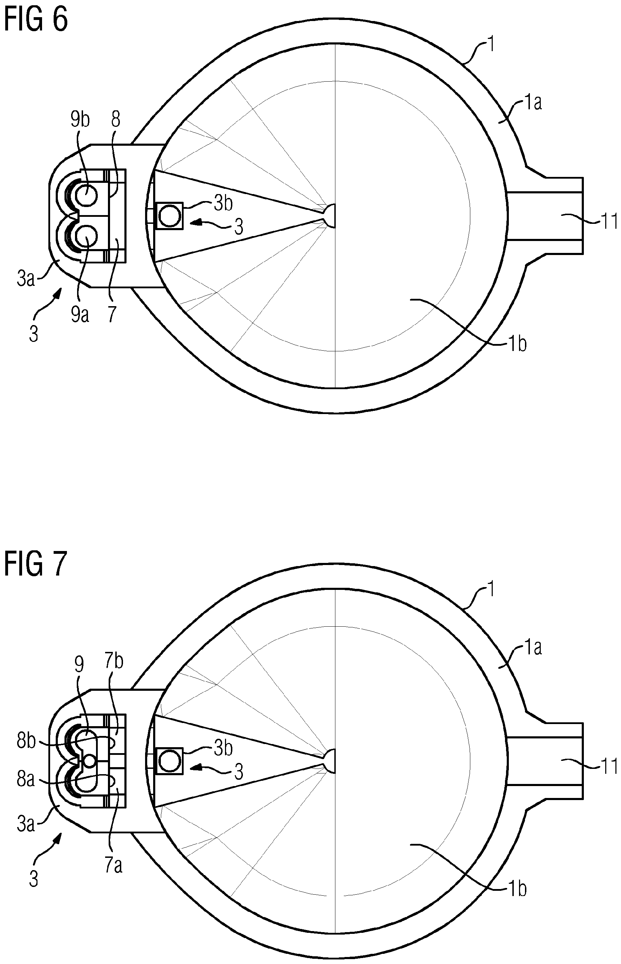

FIG 6 zeigt ein weiteres, alternatives erfindungsgemäßes Gefäßunterteil 1 in der Draufsicht, bei dem lediglich ein Zuführkanal 7 und zwei Abführkanäle 9a, 9b vorhanden sind. Gleiche Bezugszeichen wie in FIG 2 kennzeichnen gleiche Elemente.

FIG 7 zeigt ein weiteres, alternatives erfindungsgemäßes Gefäßunterteil 1 in der Draufsicht mit zwei Zuführkanälen 7a, 7b und einem Abführkanal 9. Gleiche Bezugszeichen wie in FIG 2 kennzeichnen gleiche Elemente.

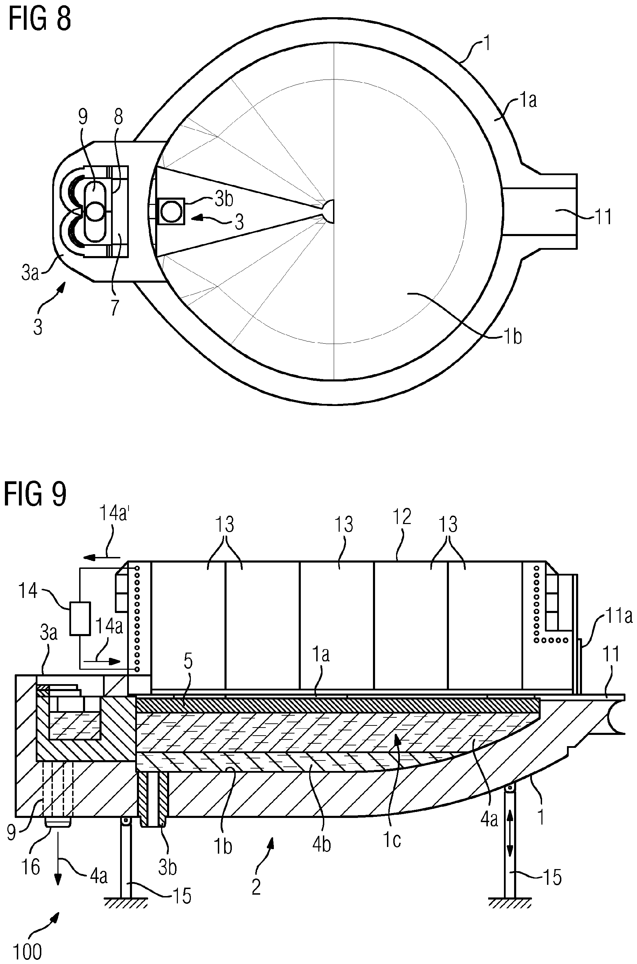

FIG 8 zeigt ein weiteres, alternatives erfindungsgemäßes Gefäßunterteil 1 in der Draufsicht mit einem Zuführkanal 7 und einem Abführkanal 9. Gleiche Bezugszeichen wie in FIG 2 kennzeichnen gleiche Elemente.

FIG 9 zeigt einen Elektrolichtbogenofen 100 in Schnittbild mit einem metallurgischen Gefäß 2, das ein Gefäßunterteil 1 gemäß FIG 4 aufweist. Gleiche Bezugszeichen wie in FIG 4 kennzeichnen gleiche Elemente. Das metallurgische Gefäß 2 weist weiterhin ein Gefäßoberteil 12 umfassend mehrere Kühlpaneele 13 auf, die mit einer schematisch dargestellten Kühlmittelversorgungseinrichtung 14 verbunden sind. Kühlmittel 14a strömt in die Kühlpaneele 13 und kühlt diese ab. Das erwärmte Kühlmittel 14a' wird zur Kühlmittelversorgungseinrichtung 14 rückgeführt und wieder aufbereitet und bevorzugt im Kreis geführt. Das Gefäßoberteil 12 weist im Bereich der Schlackenabführöffnung 11 eine bewegliche Schlackentür 16 auf, die beim Abgießen der Schlacke 5 aus dem Schmelzraum 1c geöffnet wird. Der Elektrolichtbogenofen 100 umfasst weiterhin eine lediglich schematisch dargestellte Kippeinrichtung 15 zum Kippen des Gefäßunterteils 1 oder des metallurgischen Gefäßes 2 in Richtung der Abstichvorrichtungen 3 einerseits und der Schlackenabführöffnung 11 andererseits. Bei einem Abstichvorgang fließen in diesem Beispiel ca. 150 t an flüssigem Metall 4a aus dem Schmelzraum 1c über die erste Abstichvorrichtung 3a aus dem metallurgischen Gefäß 2. Aber auch größere metallurgische Gefäße 2 mit Abstichmengen von bis zu 350 t an flüssigem Metall 4a sind realisierbar.

Die in den Figuren 1 bis 9 dargestellten Gefäßunterteile, metallurgischen Gefäße und Elektrolichtbogenöfen stellen lediglich Beispiele dar, die die vorliegende Erfindung verdeutlichen sollen. Dabei ist ein Fachmann ohne weiteres in der Lage, die geometrische Ausgestaltung des Gefäßunterteils, des Gefäßoberteils, der Abstichvorrichtungen, der Kippeinrichtung usw. abzuändern, ohne erfinderisch tätig werden zu müssen.

## Patentansprüche

1. Gefäßunterteil (1) für ein metallurgisches Gefäß (2), mit einer Gefäßwand (1a), einem Gefäßboden (1b), einem Schmelzraum (1c) und mindestens einer Abstichvorrichtung (3) zum Abziehen von flüssigem Metall (4a, 4b) aus dem Schmelzraum (1c), wobei der Schmelzraum (1c) zur Aufnahme von > 100 t an flüssigem Metall (4a, 4b) eingerichtet ist und mindestens eine nach einem Prinzip eines Flüssigkeitshebers ausgebildete erste Abstichvorrichtung (3a) vorhanden ist, die mindestens zwei separate Einlassöffnungen (6a, 6b) in der Gefäßwand (1a) zur Überführung des flüssigen Metalls (4a) vom Schmelzraum (1c) in die erste Abstichvorrichtung (3a) aufweist, wobei die Einlassöffnungen (6a, 6b) in einen einzigen Zuführkanal (7) münden und der Zuführkanal (7) im Bereich mindestens einer Überlaufkante (8) in einen einzigen Abführkanal (9) mündet oder wobei eine jede Einlassöffnung (6a, 6b) in einen separaten Zuführkanal (7a, 7b) mündet und die Zuführkanäle (7a, 7b) im Bereich mindestens einer Überlaufkante (8a, 8b) in einen einzigen Abführkanal (9) münden.

2. Gefäßunterteil nach Anspruch 1,
wobei eine jede Einlassöffnung (6a, 6b) eine maximale Breite B von 800 mm aufweist.

3. Gefäßunterteil nach Anspruch 1 oder 2,
wobei der Gefäßboden (1b) mit mindestens einer zweiten Abstichvorrichtung (3b) in Form einer Bodenabsticheinrichtung zur vollständigen Entleerung das Gefäßunterteils (1) ausgestattet ist.

4. Gefäßunterteil nach einem der Ansprüche 1 bis 3,
wobei der oder die Zuführkanäle (7, 7a, 7b) und der mindestens eine Abführkanal (9, 9a, 9b) mittels mindestens einer Heizvorrichtung (10) beheizbar sind.

5. Gefäßunterteil nach Anspruch 4,
wobei der oder die Zuführkanäle (7, 7a, 7b) und der mindestens eine Abführkanal (9, 9a, 9b) jeweils mittels einer Heizvorrichtung (10) beheizbar sind.

6. Gefäßunterteil nach einem der Ansprüche 1 bis 5,
wobei eine Schlackenabführöffnung (11) vorhanden ist, die der mindestens einen ersten Abstichvorrichtung (3a) gegenüberliegend und von dieser durch den Schmelzraum (1c) getrennt an der Gefäßwand (1a) angeordnet ist.

7. Metallurgisches Gefäß (2) umfassend ein Gefäßunterteil (1) nach einem der Ansprüche 1 bis 6,
und weiterhin ein Gefäßoberteil (12) umfassend mehrere Kühlpaneele (13).

8. Elektrolichtbogenofen (100) umfassend ein metallurgisches Gefäß (2) nach Anspruch 7,
dessen Kühlpaneele (13) mit einer Kühlmittelversorgungseinrichtung (14) verbunden sind.

9. Elektrolichtbogenofen nach Anspruch 8,
umfassend weiterhin eine Kippeinrichtung (15) zum Kippen des Gefäßunterteils (1) oder des metallurgischen Gefäßes (2) in Richtung der mindestens einen Abstichvorrichtung (3) und der Schlackenabführöffnung (11).

10. Verfahren zum Betreiben eines Elektrolichtbogenofens (100) nach einem der Ansprüche 8 oder 9,
wobei bei einem Abstichvorgang mehr als 100 t an flüssigem Metall (4a) aus dem Schmelzraum (1c) über die mindestens eine erste Abstichvorrichtung (3a) aus dem metallurgischen Gefäß (2) fließen.

11. Verfahren nach Anspruch 10,
wobei bei einem Abstichvorgang zwischen 150 und 350 t an flüssigem Metall (4a) aus dem Schmelzraum (1c) über die mindestens eine erste Abstichvorrichtung (3a) aus dem metallurgischen Gefäß (2) fließen.

## Claims

1. Vessel lower part (1) for a metallurgical vessel (2), having a vessel wall (1a), a vessel base (1b), a melt space (1c) and at least one tapping device (3) for drawing off liquid metal (4a, 4b) from the melt space (1c), wherein the melt space (1c) is designed to receive > 100 t of liquid metal (4a, 4b) and there is at least one first tapping device (3a) designed as a siphon, which device has at least two separate inlet openings (6a, 6b) in the vessel wall (1a) for the purpose of transferring the liquid metal (4a) from the melt space (1c) into the first tapping device (3a), wherein the inlet openings (6a, 6b) open into a single supply channel (7) and the supply channel (7) opens, in the region of at least one overflow edge (8), into a single discharge channel (9), or wherein each inlet opening (6a, 6b) opens into a separate supply channel (7a, 7b) and the supply channels (7a, 7b) open, in the region of at least one overflow edge (8a, 8b), into a single discharge channel (9).

2. Vessel lower part according to Claim 1,
wherein each inlet opening (6a, 6b) has a maximum width B of 800 mm.

3. Vessel lower part according to Claim 1 or 2,
wherein the vessel base (1b) is equipped with at least one second tapping device (3b) in the form of a base tapping device in order to fully empty the vessel lower part (1).

4. Vessel lower part according to one of Claims 1 to 3,
wherein the supply channel (s) (7, 7a, 7b) and the at least one discharge channel (9, 9a, 9b) can be heated by means of at least one heating device (10).

5. Vessel lower part according to Claim 4,
wherein the supply channel (s) (7, 7a, 7b) and the at least one discharge channel (9, 9a, 9b) can each be heated by means of a heating device (10).

6. Vessel lower part according to one of Claims 1 to 5,
wherein there is a slag discharge opening (11) which is arranged on the vessel wall (1a), opposite the at least one first tapping device (3a) and separated therefrom by the melt space (1c).

7. Metallurgical vessel (2) comprising a vessel lower part (1) according to one of Claims 1 to 6,
and further comprising a vessel upper part (12) comprising multiple cooling panels (13).

8. Electric arc furnace (100) comprising a metallurgical vessel (2) according to Claim 7,
of which the cooling panels (13) are connected to a coolant supply device (14).

9. Electric arc furnace according to Claim 8,
further comprising a tipping device (15) for tipping the vessel lower part (1) or the metallurgical vessel (2) in the direction of the at least one tapping device (3) and the slag discharge opening (11).

10. Method for the operation of an electric arc furnace (100) according to either of Claims 8 and 9,
wherein, in a tapping operation, more than 100 t of liquid metal (4a) flows from the melt space (1c) via the at least one first tapping device (3a) and out of the metallurgical vessel (2).

11. Method according to Claim 10,
wherein, in a tapping operation, between 150 and 350 t of liquid metal (4a) flows from the melt space (1c) via the at least one first tapping device (3a) and out of the metallurgical vessel (2).

## Revendications

1. Partie inférieure de récipient (1) pour récipient métallurgique (2), comportant une paroi de récipient (1a), un fond de récipient (1b), une chambre de fusion (1c) et au moins un dispositif de coulée (3) servant à retirer du métal liquide (4a, 4b) de la chambre de fusion (1c), la chambre de fusion (1c) étant destinée à contenir plus de 100 t de métal liquide (4a, 4b) et au moins un premier dispositif de coulée (3a), configuré selon le principe d'un élévateur de liquide, comporte au moins deux orifices d'entrée (6a, 6b) séparés ménagés dans la paroi de récipient (1a) pour transférer le métal liquide (4a) de la chambre de fusion (1c) dans le premier dispositif de coulée (3a), les orifices d'entrée (6a, 6b) débouchant dans un canal d'amenée (7) unique et le canal d'amenée (7) débouchant dans un canal d'évacuation (9) unique dans la zone d'au moins un bord-déversoir (8), ou chaque orifice d'entrée (6a, 6b) débouchant dans un canal d'amenée (7a, 7b) séparé et les canaux d'amenée (7a, 7b) débouchant dans un canal d'évacuation (9) unique dans la zone d'au moins un bord-déversoir (8a, 8b).

2. Partie inférieure de récipient selon la revendication 1, chaque orifice d'entrée (6a, 6b) ayant une largeur maximale B de 800 mm.

3. Partie inférieure de récipient selon la revendication 1 ou 2, le fond de récipient (1b) étant équipé d'au moins un second dispositif de coulée (3b) se présentant sous la forme d'un dispositif de coulée de fond destiné à la vidange complète de la partie inférieure de récipient (1).

4. Partie inférieure de récipient selon l'une des revendications 1 à 3, le canal ou les canaux d'amenée (7, 7a, 7b) et l'au moins un canal d'évacuation (9, 9a, 9b) pouvant être chauffés au moyen d'au moins un dispositif de chauffage (10).

5. Partie inférieure de récipient selon la revendication 4, le canal ou les canaux d'amenée (7, 7a, 7b) et l'au moins un canal d'évacuation (9, 9a, 9b) pouvant être chauffés chacun au moyen d'au moins un dispositif de chauffage (10).

6. Partie inférieure de récipient selon l'une des revendications 1 à 5, une ouverture d'évacuation de scories (11), qui est située à l'opposé de l'au moins un premier dispositif de coulée (3a) et est séparée de celui-ci par la chambre de fusion (1c), étant ménagée dans la paroi de récipient (1a).

7. Récipient métallurgique (2) comprenant une partie inférieure de récipient (1) selon l'une des revendications 1 à 6, et, en outre, une partie supérieure de récipient (12) comprenant plusieurs panneaux de refroidissement (13).

8. Four à arc électrique (100) comprenant un récipient métallurgique (2) selon la revendication 7, dont les panneaux de refroidissement (13) sont reliés à un dispositif d'alimentation en fluide de refroidissement (14).

9. Four à arc électrique selon la revendication 8, comprenant en outre un dispositif de basculement (15) destiné à faire basculer la partie inférieure de récipient (1) ou le récipient métallurgique (2) dans la direction de l'au moins un dispositif de coulée (3) et de l'ouverture d'évacuation de scories (11).

10. Procédé pour faire fonctionner un four à arc électrique (100) selon l'une des revendications 8 ou 9, dans lequel, lors d'une opération de coulée, plus de 100 t de métal liquide (4a) s'écoulent hors du récipient métallurgique (2) depuis la chambre de fusion (1c) par l'intermédiaire de l'au moins un premier dispositif de coulée (3a).

11. Procédé selon la revendication 10, dans lequel, lors d'une opération de coulée, entre 150 t et 350 t de métal liquide (4a) s'écoulent hors du récipient métallurgique (2) depuis la chambre de fusion (1c) par l'intermédiaire de l'au moins un premier dispositif de coulée (3a).
